# EUROPEAN PATENT SPECIFICATION

(11) **EP 2 447 814 B1**
(45) Date of publication and mention of the grant of the patent: **13.04.2016**
(21) Application number: 11187053.1
(22) Date of filing: 28.10.2011
(51) Int. Cl.: G06F 3/041, G06F 3/044

(54) **Liquid crystal display with integrated touch screen panel and driving method thereof**
Flüssigkristallanzeige mit integrierter Berührungsbildschirmtafel und Ansteuerungsverfahren dafür
Dispositif d'affichage à cristaux liquides doté d'un panneau d'écran tactile et son procédé de commande

(30) Priority: 29.10.2010 KR 20100106734; 21.04.2011 KR 20110037291
(43) Date of publication of application: 02.05.2012
(73) Proprietor: Samsung Display Co., Ltd., Gyeonggi-do (KR)
(72) Inventor: Park, Jin-Woo, Chungcheongnam-do (KR); Pak, Sang-Jin, Chungcheongnam-do (KR); Lee, Jin-Hee, Chungcheongnam-do (KR); Ha, Sang-Kwon, Chungcheongnam-do (KR); Lee, Ji-Gong, Chungcheongnam-do (KR); Yoshimura, Hideo, Chungcheongnam-do (KR); Kim, Cheol-Min, Chungcheongnam-do (KR); Lee, Joo-Hyung, Chungcheongnam-do (KR)
(74) Representative: Walaski, Jan Filip

(56) References cited:
- WO-A2-2007/146779
- US-A- 5 392 058
- US-A1- 2010 182 273

## Description

The present invention relates to a liquid crystal display (LCD), and more particularly, to an LCD with an integrated mutual capacitive touch screen panel and a driving method thereof.

A touch screen panel is an input device that allows a user's instruction to be input by selecting an instruction content displayed on a screen of an image display or the like with a user's hand or object. The touch screen panel may be formed on a front face of the image display to convert a contact position into an electrical signal. For example, when the user's hand or object is directly contacting the touch screen panel at the contact position, the instruction content selected at the contact position is input as an input signal to the image display. Since such a touch screen panel can be substituted for a separate input device connected to an image display, e.g., a keyboard or mouse, its application fields have been gradually extended.

Touch screen panels may be divided, e.g., into resistive overlay touch screen panels, photosensitive touch screen panels, capacitive touch screen panels, and the like. For example, the capacitive touch screen panel converts a contact position into an electrical signal by sensing a change in capacitance formed between a conductive sensing pattern and an adjacent sensing pattern, ground electrode or the like, when a user's hand or object is in contact with the touch screen panel. Such a touch screen panel generally is attached to an outer surface of a flat panel display, e.g., an LCD or an organic light emitting display, so as to be implemented as a product.

However, when a touch screen panel is attached to an outer surface of a conventional flat panel display, an adhesive layer may be required between the touch screen panel and the flat panel display. As such, separate processes are required to form the touch screen panel, thereby increasing processing time and costs. Further, attachment of the touch screen panel to an outer surface of the flat panel display may increase an overall thickness of the flat panel display.

Embodiments are therefore directed to an LCD with an integrated mutual capacitive touch screen panel and a driving method thereof, which substantially overcome one or more of the problems due to the limitations and disadvantages of the related art.

WO 2007/146779 and US 2010/182273 relate to LCDs having integrated touch screen panels.

It is therefore a feature of an embodiment to provide an LCD with an integrated touch screen panel having an electrode used as a common electrode in the LCD and as a driving electrode in the touch screen panel.
It is therefore another feature of an embodiment to provide an LCD with an integrated touch screen panel capable of increasing touch sensitivity without degradation of image quality.
It is yet another feature of an embodiment to provide a driving method of an LCD with an integrated touch screen panel having one or more of the above features.
According to an aspect of the present invention, there is provided an LCD according to claim 1. According to another aspect of the present invention, there is provided a method of driving an LCD according to claim 6. Optional features are set out in the dependent claims.
At least one of the above and other features and advantages may be realized by providing an LCD with an integrated touch screen panel, including a plurality of pixels connected to a plurality of data lines and a plurality of gate lines, the gate lines being divided into a plurality of groups, a plurality of sensing electrodes, a plurality of common electrodes divided into a plurality of groups, a common electrode driver configured to simultaneously supply a driving signal to common electrodes within each group of the plurality of groups of the common electrodes, and to sequentially supply the driving signal to the plurality of groups of the common electrodes, and a gate driver configured to sequentially supply a gate signal to gate lines within each of the plurality of group of the gate lines.
The LCD may further include first and second substrates spaced apart from each other, and a liquid crystal layer between the first and second substrates.

The sensing electrodes and the common electrodes may be positioned in a same layer or in different layers from each other at any one of the substrates.
The sensing electrodes and the common electrodes may intersect each other.

The common electrodes may define a plurality of groups divided in a regular sequence.

The gate lines may define a plurality of groups divided based on a predetermined sequence difference.

The supply of the driving signal by the common electrode driver and the supply of the gate signal by the gate driver may be alternately performed.

The common electrode driver may be configured to supply a same common voltage to all the common electrodes, except during a period in which the driving signal is supplied.

The driving signal may have a higher voltage than the common voltage.

For two groups divided into odd-numbered gate lines and even-numbered gate lines, the gate driver may be configured to sequentially supply a gate signal to gate lines included in each of the groups of gate lines.

The supply of the driving signal by the common electrode driver and the supply of the gate signal to each of the groups by the gate driver may be alternately performed.

For a plurality of groups obtained by respectively dividing odd-numbered common electrodes and even-numbered common electrodes based on sequence differences, the common electrode driver may simultaneously supply a driving signal to common electrodes included in each of the groups, sequentially supply the driving signal to the plurality of groups configured as the odd-numbered common electrodes, and sequentially supply the driving signal to the plurality of groups configured as the even-numbered common electrodes.

The supply of the driving signal to the plurality of groups configured as the odd-numbered common electrodes may be performed before the supply of the gate signal to the group configured as the odd-numbered gate lines, and the supply of the driving signal to the plurality of groups configured as the even-numbered common electrodes may be performed before the supply of the gate signal to the group configured as the even-numbered gate lines.

At least one of the above and other features and advantages may be realized by providing a driving method of an LCD with an integrated touch screen panel, the method including dividing common electrode patterns into a first plurality of groups based on a first predetermined sequence difference, dividing gate lines into a second plurality of groups based on a second predetermined sequence difference, simultaneously supplying a driving signal to common electrode patterns within a same group of the first plurality of groups and sequentially supplying the driving signal to the first plurality of groups, and sequentially supplying a gate signal to gate lines included in the second plurality of groups.

Supplying the driving and gate signals may include supplying the driving signal and the gate signal alternately.

Supplying the driving signal and the gate signal may include applying a same common voltage to all the common electrode patterns, except the period in which the driving signal is supplied.

The driving signal may have a higher voltage than the common voltage.

Supplying the driving signal and the gate signal may include dividing the gate lines into two groups of odd-numbered gate lines and even-numbered gate lines to have a sequence difference of two.

In the supplying of the driving signal and the gate signal, for a plurality of groups obtained by respectively dividing odd-numbered common electrode patterns and even-numbered common electrode patterns based on sequence differences, the common electrode driver may simultaneously supply a driving signal to common electrode patterns included in each of the groups, sequentially supply the driving signal to the plurality of groups configured as the odd-numbered common electrode patterns, and sequentially supply the driving signal to the plurality of groups configured as the even-numbered common electrode patterns.

In the supplying of the driving signal and the gate signal, the supply of the driving signal to the plurality of groups configured as the odd-numbered common electrode patterns may be performed before the supply of the gate signal to the group configured as the odd-numbered gate lines, and the supply of the driving signal to the plurality of groups configured as the even-numbered common electrode patterns may be performed before the supply of the gate signal to the group configured as the even-numbered gate lines.

The above and other features and advantages will become more apparent to those of ordinary skill in the art by describing in detail examples and embodiments with reference to the attached drawings, in which:
FIG. 1 illustrates a block diagram of an LCD with an integrated touch screen panel according to an example.
FIG. 2 illustrates an equivalent circuit diagram of a pixel in FIG. 1.
FIG. 3 illustrates a partial cross-sectional view of an LCD with an integrated touch screen panel according to an example.
FIG. 4 illustrates a schematic view of an arrangement of common electrode patterns (driving electrodes) and sensing electrodes in FIG. 3.
FIG. 5 illustrates a graph of driving an LCD with an integrated touch screen panel according to an example.
FIG. 6 illustrates a waveform diagram of signals provided by a common electrode driver and a gate driver in the driving graph of FIG. 5.
FIG. 7 illustrates a graph of driving an LCD with an integrated touch screen panel according to another example.
FIG. 8 illustrates a waveform diagram of signals provided by a common electrode driver and a gate driver in the driving graph of FIG. 7.
FIG. 9 illustrates a schematic view of an arrangement of common electrode patterns and sensing electrodes according to another embodiment.
FIG. 10 illustrates a graph of driving an LCD with an integrated touch screen panel according another embodiment.
FIG. 11 illustrates a waveform diagram of signals provided by a common electrode driver and a gate in the driving graph of FIG. 10.

Examples and embodiments will now be described more fully hereinafter with reference to the accompanying drawings; however, the invention may be embodied in different forms and should not be construed as limited to the embodiments set forth herein. Rather, these embodiments are provided so that this disclosure will be thorough and complete, and will fully convey the scope of the invention to those skilled in the art.

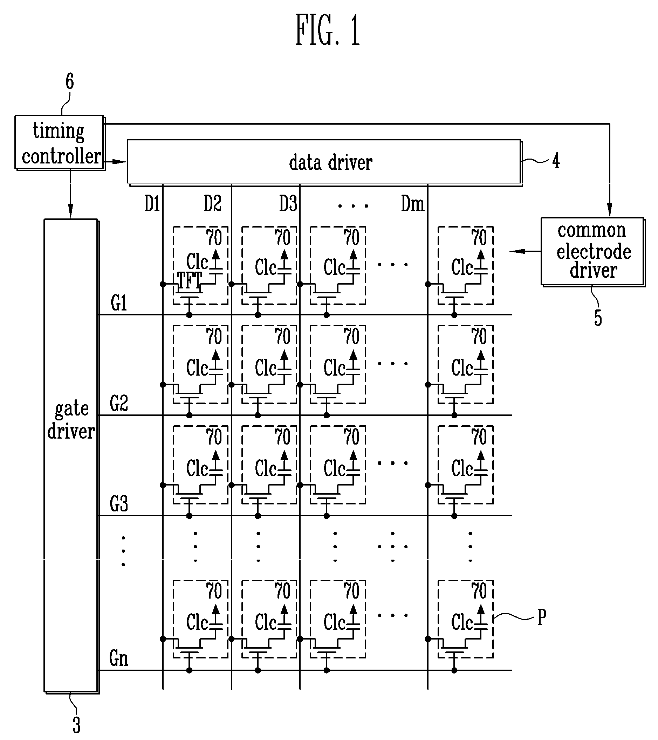

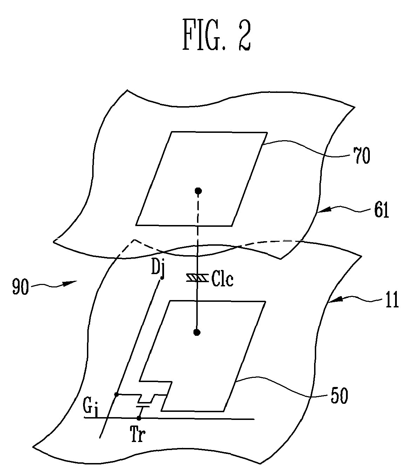

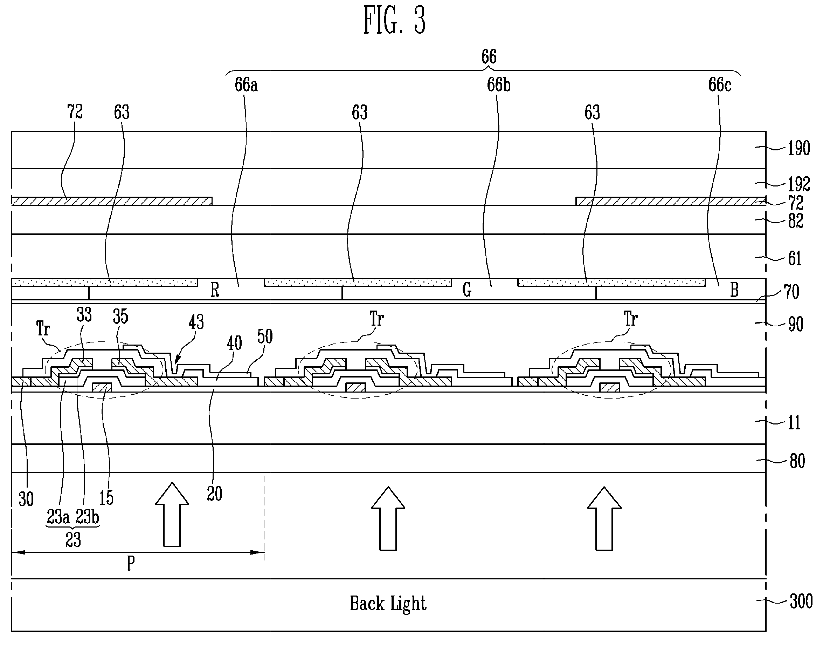

Hereinafter an example will be described in detail with reference to FIGS. 1-3. FIG. 1 illustrates a block diagram of an LCD with an integrated touch screen panel according to an embodiment, FIG. 2 illustrates an equivalent circuit diagram of a pixel shown in FIG. 1, and FIG. 3 illustrates a cross-sectional view of an area of the LCD of FIG. 1. It is noted that the configuration of the LCD with the integrated touch screen panel for displaying images is mainly illustrated in FIG. 1.

As illustrated in FIG. 1, an LCD with the integrated touch screen panel according to this example includes a gate driver 3 for supplying a gate signal to gate lines G1 to Gn arranged in a first direction (e.g., a horizontal direction), a data driver 4 for supplying a data signal to data lines D1 to Dm arranged in a second direction (e.g., a vertical direction) intersected with the first direction, a plurality of pixels P respectively having thin film transistors Tr connected to the gate lines G1 to Gn and the data lines D1 to Dm, and a common electrode driver 5 for supplying a common voltage and a driving signal to a common electrode 70. The LCD may further include a timing controller 6 for controlling the gate driver 3, the data driver 4, and the common electrode driver 6.

An LCD is a display that displays an image using the optical anisotropy and polarizing property of liquid crystals. Liquid crystals with a thin and long molecular structure have an optical anisotropy, in which the molecular arrangement of the liquid crystals is directionally oriented, and a polarizing property, in which the molecular arrangement direction of the liquid crystals is changed in an electric field according to their sizes.

Accordingly, the LCD includes a liquid crystal panel. The liquid crystal panel may be configured by joining a first substrate and a second substrate respectively having pixel electrodes and a common electrode, such that the pixel electrodes and the common electrode may face each other with a liquid crystal layer interposed therebetween. A predetermined electric field is formed between the pixel electrodes and the common electrode by applying a data signal and a common voltage to the respective pixel and common electrodes of pixels selected by a gate signal. Therefore, transmittance of light emitted from a back light is then controlled based on the arrangement angle of the liquid crystals, i.e., an arrangement controlled by the electric field, thereby displaying an image.

In detail, as illustrated in FIGS. 2 and 3, the LCD with the integrated touch screen panel has a configuration in which a first substrate 11 and a second substrate 61 are joined together to face each other with a liquid crystal layer 90 interposed therebetween. In the LCD, the gate lines G1 to Gn and the data lines D1 to Dm, which are horizontally and vertically intersecting each other, may be arranged on a top surface of the first substrate 11, e.g., a lower substrate, and the thin film transistors Tr are connected to pixel electrodes 50 formed in the pixels P one by one at the intersection points of the gate lines G1 to Gn and the data lines D1 to Dm.

More specifically, referring to FIG. 2, a pixel P connected to an i-th gate line Gi and a j-th data line Dj includes a thin film transistor Tr connected to the i-th gate line Gi and the j-th data line Dj. Further, the pixel P includes a pixel electrode 50 connected to the thin film transistor Tr, and a liquid crystal capacitor Clc connected to the pixel electrode 50 and the common electrode 70.

As shown in FIG. 3, the thin film transistor Tr may include a gate electrode 15 connected to the gate line, source/drain electrodes 33 and 35, and a semiconductor layer 23 formed between the gate electrode 15 and the source/drain electrodes 33 and 35. Here, the semiconductor layer 23 includes an active layer 23a and an ohmic contact layer 23b.

A gate insulating layer 20 may be formed on the gate electrode 15, and a protection layer 40 may be formed on the source/drain electrodes 33 and 35. A contact hole 43 is formed in the protection layer 40 so that the drain electrode 35 is exposed therethrough. The pixel electrode 50 is formed on a top of the protection layer 40 to be connected to the drain electrode 35 through the contact hole 43.

The liquid crystal capacitor Clc uses the pixel electrode 50 and the common electrode 70 on the second substrate 61 as two terminals, and the liquid crystal layer 90 between the two electrodes 50 and 70 serves as a dielectric substance.

A lattice-shaped black matrix 63, red, green, blue colour filter patterns 66a, 66b and 66c, and the common electrode 70 may be formed on the surface of the second substrate 61, e.g., an upper substrate, opposite to the first substrate 11, e.g., to face the first substrate 11. The lattice-shaped black matrix 63 may surround each of the pixels P so as to cover a non-display area including the gate lines G1 to Gn, the data lines D1 to Dm, the thin film transistors Tr, and the like. The red, green, and blue color filter patterns 66a, 66b, and 66c may be sequentially and repeatedly arranged to correspond to the respective pixels P in the interior of the black matrix 63. The common electrode 70 may be formed of a transparent conductive material below the color filter pattern 66, e.g., between the color filter pattern 66 and the liquid crystal layer 90.

An overcoat layer (not shown) may be further formed between the color filter pattern 66 and the common electrode 70. Since the positions of the black matrix 63 and the color filter pattern 66 may be changed, the common electrode 70 may be formed on an inner surface of the second substrate 61, e.g., directly on a surface of the second substrate 61 facing the first substrate 11, when the positions of the black matrix 63 and the color filter pattern 66 are changed.

As shown in FIG. 3, first and second polarizing plates 80 and 82 may be attached to outer surfaces of the first and second substrates 11 and 61, respectively. A window 190 as a transparent substrate may be attached on a polarizing plate in a direction in which an image is displayed, e.g., on the second polarizing plate 82.

The example shown in FIG. 3 has a structure in which a back light 300 is positioned below the first substrate 11, and therefore, an image is displayed in the direction of the second substrate 61. Accordingly, the window 190 is attached on the second polarizing plate 82. In the example shown in FIG. 3, the first polarizing plate 80 is provided, and hence the back light 300 is positioned below the first polarizing plate 80.

The image display operation of the LCD with the integrated touch screen panel having the configuration as described above will be briefly described as follows. First, if a gate signal is applied to the gate electrode 15 of the thin film transistor Tr provided to each of the pixels P, the active layer 23a is activated. Accordingly, the source electrode 33 transfers a data signal applied from a data line 30 connected to the source electrode 33 to the drain electrode 35 spaced apart from the source electrode 33 at a predetermined interval via the active layer 23a positioned below the source electrode 33.

In this instance, the drain electrode 35 is electrically connected to the pixel electrode 50 through the contact hole 43. Therefore, the voltage of the data signal is applied to the pixel electrode 50, and the applied voltage is stored in a storage capacitor Cst provided to each of the pixels P.

Accordingly, the arrangement of the liquid crystal molecules between the pixel electrode 50 and the common electrode 70 is controlled according to a voltage corresponding to the difference between voltages respectively applied to the pixel electrode 50 and the common electrode 70, thereby displaying a predetermined image.

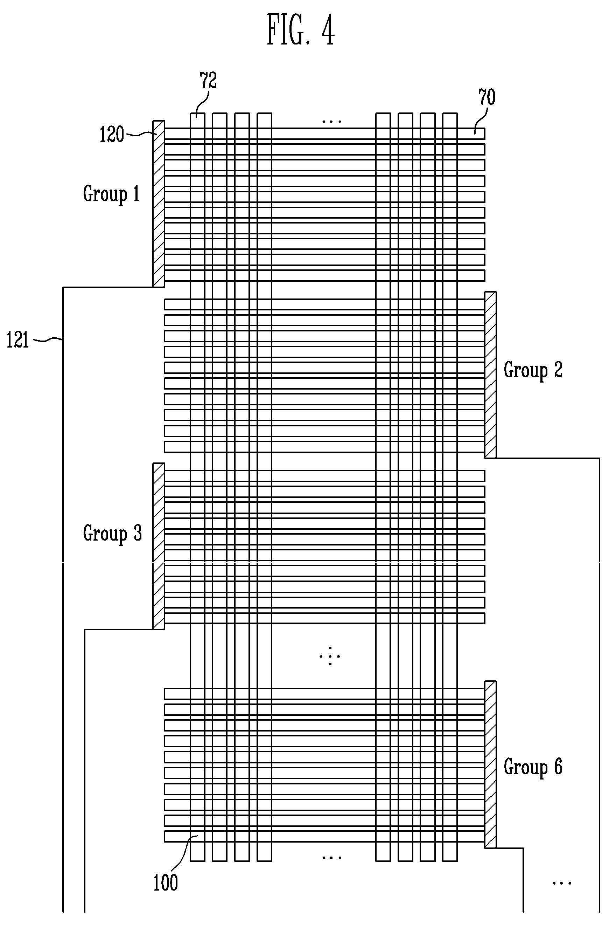

In the conventional LCD, the common electrode is integrally formed on the entire lower surface of the second substrate 61 to receive the same voltage. However, the LCD with the integrated touch screen panel according to this example may include the common electrode 70 with a plurality of patterns separated from one another, as will be described in more detail below with reference to FIG. 4. Therefore, the common electrode 70 may receive both common voltage and driving signals, so that the plurality of patterns of the common electrode 70 may also be used as driving electrodes of a mutual capacitive touch screen panel. FIG. 4 illustrates a view of a structure of the patterns of the common electrode 70 (driving electrodes). Referring to FIG. 4, the common electrode 70 of this example may be formed as a plurality of common electrode patterns arranged to be spaced apart at a predetermined interval and to extend in the first direction (e.g., the horizontal direction). For example, the common electrode patterns 70 may extend along the horizontal direction and may be spaced apart from each other along the vertical direction. Thus, the plurality of common electrode patterns may be used as driving electrodes of a mutual capacitive touch screen panel.

For example, the plurality of common electrode patterns 70 may be formed in the same direction to correspond to the respective gate lines G1 to Gn. Accordingly, an i-th common electrode pattern may be connected to one row of pixels connected to an i-th gate line Gi. That is, the one row of pixels connected to the i-th gate line Gi connect pixel electrodes 50 respectively included therein to the i-the common electrode through the liquid crystal capacitors Clc. The plurality of common electrode patterns may be divided into sequential groups, so the common electrode driver 5 may supply driving signals to interconnected common electrode patterns within each of the group.

A plurality of sensing electrodes 72 respectively corresponding to the common electrode patterns may be implemented as a plurality of sensing electrode patterns arranged to be spaced apart at a predetermined interval in the second direction (e.g., the vertical direction) intersected with the first direction. In other words, the sensing electrodes 72 and the common electrode patterns may intersect each other to define a grid pattern. The plurality of sensing electrodes 72 are formed at the outside of the second substrate 61, e.g., the second substrate 61 may be between the sensing electrodes 72 and the liquid crystal layer 90.

In a case where the second polarizing plate 82 and the window 190 are provided, the sensing electrodes 72 may be formed between the second substrate 61 and the window 190. For example, the sensing electrodes 72 may be formed on the top surface of the second polarizing plate 82, as shown in FIG. 3, or may be formed on the bottom surface of the window 190. Alternatively, the sensing electrodes 72 may be formed on the top surface of the second substrate 61 or on the bottom surface of the second polarizing plate 82. The sensing electrodes 72 may be formed of a transparent conductive material (e.g., indium tin oxide (ITO)), and may be implemented by attaching a film having the transparent conductive material patterned thereon to the second polarizing plate 82, the window 90, or the like.

Since the common electrode patterns i.e., driving electrodes, and the sensing electrodes 72 intersect each other, mutual capacitances between the common electrode 70 and the sensing electrodes 72 may be formed at intersection points of the common electrode 70 and the sensing electrodes 72, respectively. The intersection points at which the mutual capacitances are formed may define sensing cells 100 for implementing touch recognition, respectively.

In FIG. 4, the common electrode patterns 70 and the sensing electrodes 72 are formed in a straight bar. However, examples are not limited thereto.

For example, the common electrode 70 and the sensing electrodes 72 may be formed in the shape of a diamond or the like.

As an example, the common electrodes 70 and the sensing electrodes 72 may be arranged in the form of orthogonal intersection with each other. In addition, the common electrodes 70 and the sensing electrodes 72 may be arranged in an intersection form of another geometric configuration (a concentric circular or radial line in the polar coordinate arrangement), and the like.

Although it has been illustrated in FIG. 3 that the sensing electrodes 72 are positioned above the second substrate 61 and the common electrodes 70 are positioned below the second substrate 61, the present invention is not limited thereto. That is, the common electrodes 70 and the sensing electrodes 72 may be positioned in the same layer or in different layers from each other at any one of the substrates 11 and 61.

For convenience of illustration, a case where the number of the common electrode patterns is 60 is shown in FIG. 4. It will be apparent that the number of the common electrode patterns may be variously changed. It is further noted that while the common electrode patterns are spaced apart from each other, they may be electrically interconnected for common voltage application, as will be described in more detail below.

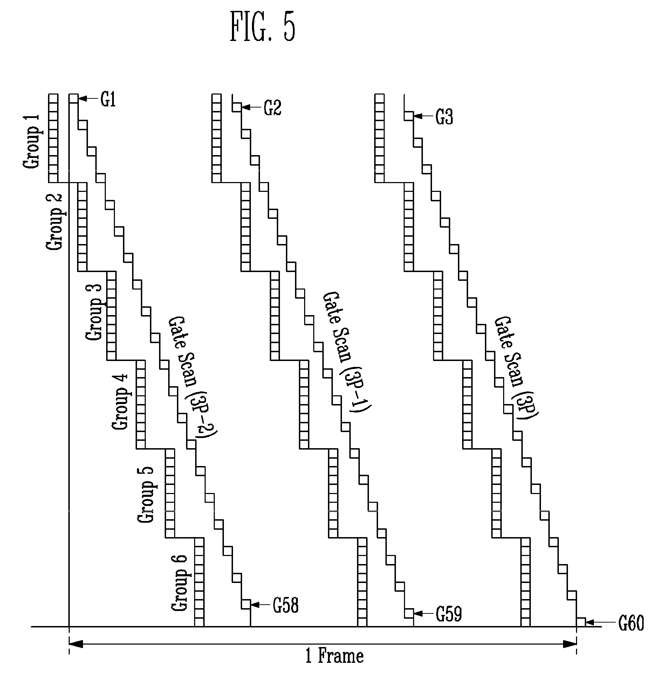

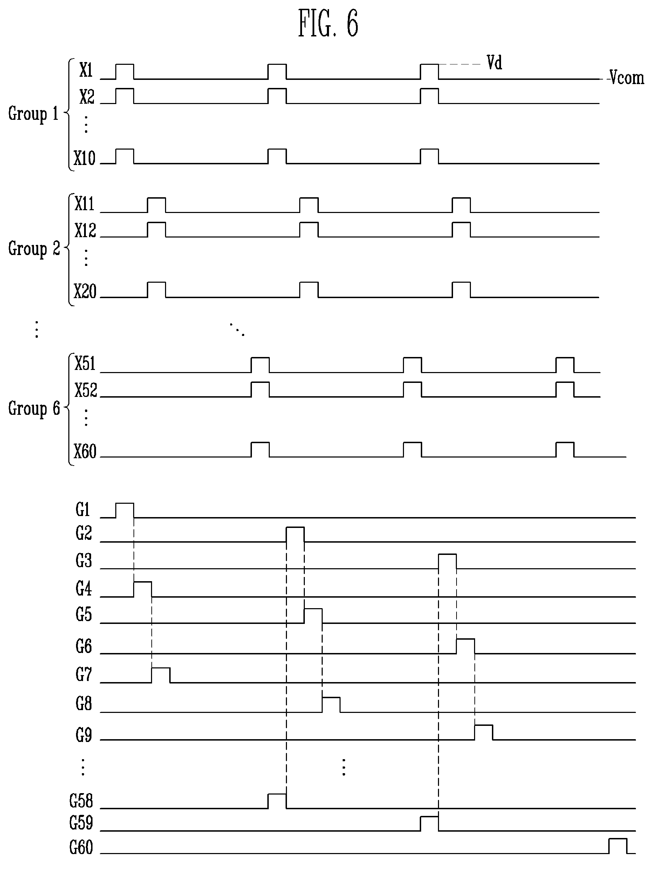

FIG. 5 illustrates a graph of driving the LCD with the integrated touch screen panel according to an example. FIG. 6 illustrates a waveform diagram of signals provided by a common electrode driver and a gate driver for the purpose of the driving shown in FIG. 5. For convenience, FIGS. 5 and 6 illustrate a case where the number of each of the common electrode patterns and of the gate lines G1 to Gn is 60. In this case, the 60 common electrode patterns include first to 60th common electrodes X1 to X60, and the 60 gate lines include first to 60th gate lines G1 to G60.

In detail, the common electrode patterns may be sequentially divided into a plurality of groups, e.g., six groups, and the common electrode driver 5 may simultaneously supply a driving signal to the common electrode patterns included in each of the groups. The common electrode driver 5 may sequentially supply the driving signal to the groups. In this instance, the common electrodes 70 may be divided in a regular sequence so as to form the plurality of groups.

The plurality of groups obtained by sequentially dividing the common electrode patterns may be formed so that a predetermined number of common electrode patterns are formed to be included in each of the groups in sequence from the first common electrode pattern. For example, as shown in FIGS. 4-5, the common electrode patterns 70 may be sequentially divided into six (6) groups, such that each group includes ten (10) common electrode patterns from the first common electrode.

That is, the common electrode 70 may be divided into a first group Group 1 from first to 10th common electrode patterns, a second group Group 2 from 11th to 20th common electrode patterns, a third group Group 3 from 21st to 30th common electrodes, a fourth group Group 4 from 31st to 40th common electrodes, a fifth group Group 5 from 41st to 50th common electrodes and a sixth group Group 6 from 51st to 60th common electrodes. However, the number of common electrode patterns included in each of the groups may be changed, and the number of groups may also be changed.

As described previously, the common electrode driver 5 may simultaneously supply a driving signal to common electrode patterns included in the same group. The common electrode driver 5 may sequentially supply the driving signal to the groups. For example, as illustrated in FIG. 6, the common electrode driver 5 may simultaneously supply a driving signal, e.g., voltage Vd, to driving electrodes, e.g., electrodes X1 through X10, included in the same group, e.g., Group 1, among the first to sixth groups Group 1 to Group 6. The common electrode driver 5 may sequentially supply the driving signal to the first to sixth groups Group 1 to Group 6. However, there may exist a period in which common voltage Vcom with the same amplitude is supplied between periods in which the driving signal is supplied to each of the groups, e.g., Vcom is applied between pulses of Vd in FIG. 6.

As shown in FIG. 4, common electrode patterns within each group may be connected to each other via a conducting portion 120. In other words, the conducting portions may divide the common electrode 70 into the plurality of groups by electrically connecting common electrode patterns included in each of the groups at an outside of the common electrode. For example, one conducting portion 120 may extend in the second direction to connect outermost edges of the common electrode patterns in each group. The conducting portions 120 may be formed of a transparent conductive material (e.g., ITO) or metal. In a case where the conducting portions 120 are formed, a number of common electrode lines 121 that connect the common electrode patterns to the common electrode driver 5 may be decreased.

The common voltage Vcom refers to a voltage identically supplied to each of the common electrode patterns 70, so that an image is displayed in the LCD. The common voltage Vcom is applied to all the common electrode patterns 70a.

The driving signal is used to determine a touch position, and may be a higher voltage Vd than the common voltage Vcom. When a finger or an object touches a position on the screen, i.e., a position corresponding to a sensing electrode 72, and a driving signal is sequentially supplied to the groups, the sensing cell 100 at an intersection of the touched sensing electrode 72 and a common electrode pattern receiving the driving signal may sense the touch according to change in capacitance. That is, voltage generated by a change in mutual capacitance is sensed, thereby determining a touch position.

The number of times at which the driving signal is supplied to the common electrode 70 as described above may be increased so as to better sense the touch position. However, in a case where a gate signal is supplied to each of the gate lines G1 to Gn so as to display an image, a common voltage Vcom is necessarily supplied to a common electrode pattern corresponding to the activated gate line, rather than a driving signal. When a driving signal is supplied to the common electrode 70 during gate activation, the voltage applied to the common electrode 70 is the voltage of the driving signal, rather than the common voltage Vcom, thereby causing an error in image quality.

Further, according to an example, for a plurality of groups composed of the gate lines G1 to Gn, the gate driver 3 according to this example sequentially supplies a gate signal to gate lines included in each of groups. Unlike the common electrode 70 divided so that a predetermined number of common electrode patterns are sequentially included in each of the groups, the gate lines G1 to Gn are divided into a plurality of groups based on a predetermined sequence difference. That is, the gate lines G1 to Gn may be sequentially arranged from the first gate line G1 positioned on a first row to the n-th gate line Gn positioned on the last row, and the difference between numbers given in such a sequence is defined as a sequence difference.

For example, in a configuration of sixty (60) common electrode patterns, sixty (60) gate lines G1 to Gn may be divided into groups based on a sequence difference of three (3). That is, a first group may include a first gate line G1, a fourth gate line G4, a seventh gate line G7, ..., a 55th gate line G55, and a 58th gate line G58. Similarly, a second group may include a second gate line G2, a fifth gate line G5, an eighth gate line G8, ..., a 56th gate line G56 and a 59th gate line G59, and a third group may include a third gate line G3, a sixth gate line G6, a ninth gate line G9, ..., a 57th gate line G57, and a 60th gate line G60.

Consequently, the first group may be configured as gate lines having numbers of 3P-2, the second group may be configured as gate lines having numbers of 3P-1, and the third group may be configured as gate lines having number of 3P (here, P is a natural number).

However, the sequence difference is not limited to three but may be changed into a natural number of two or more. Similarly, the number of groups formed based on the change in sequence difference may also change. For a plurality of groups divided in the aforementioned manner, the gate driver 3 may sequentially supply a gate signal to gate lines included in each of the groups.

In a case where the plurality of groups is divided into three, as described in the aforementioned example, the gate driver 3 may sequentially supply a gate signal to the first gate line G1, the fourth gate line G4, the seventh gate line G7, ..., the 55th gate line G55, and the 58th gate line G58. Then, the gate driver 3 may sequentially supply the gate signal to the second gate line G2, the fifth gate line G5, the eighth gate line G8, ..., the 56th gate line G56, and the 59th gate line G59. Then, the gate driver 3 may sequentially supply the gate signal to the third gate line G3, the sixth gate line G6, the ninth gate line G9, ..., the 57th gate line G57, and the 60th gate line G60.

The supply of the gate signal by the gate driver 3 to each of the groups may be sequentially performed during a frame period, thereby displaying an image of one frame on a screen. The supply of the driving signal to each of the groups by the common electrode driver 5 may be alternately performed with the supply of the driving signal to each of the group by the gate driver 3.

Accordingly, although the common voltage Vcom is supplied, rather than the driving signal, to the common electrode pattern corresponding to the gate line to which the gate signal is supplied, the number of times at which the driving signal is supplied may be increased in accordance with a number of groups obtained by dividing the gate lines G1 to Gn. Thus, it may be possible to enhance touch sensitivity.

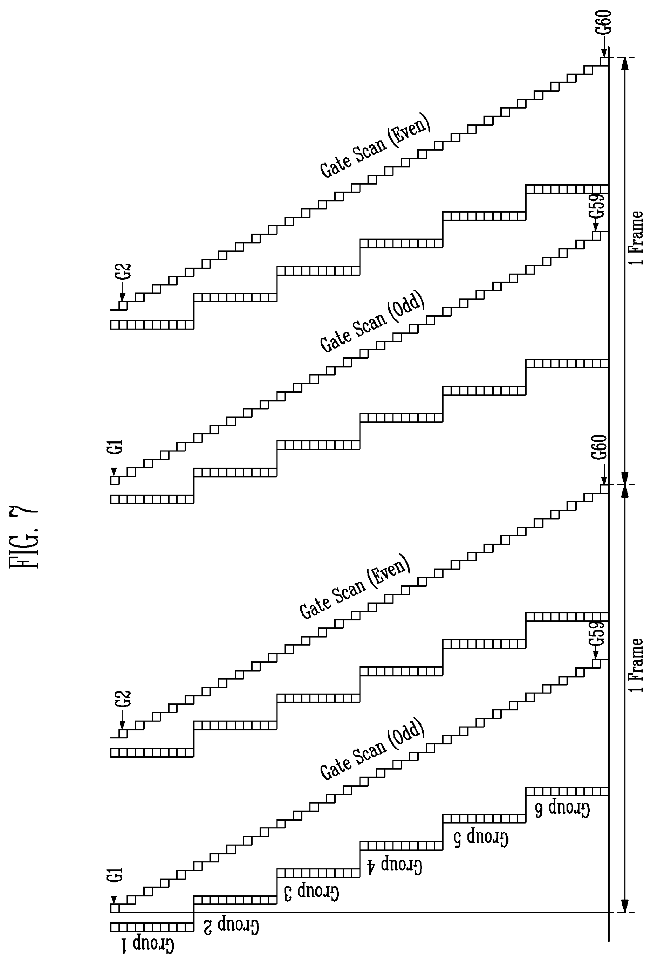

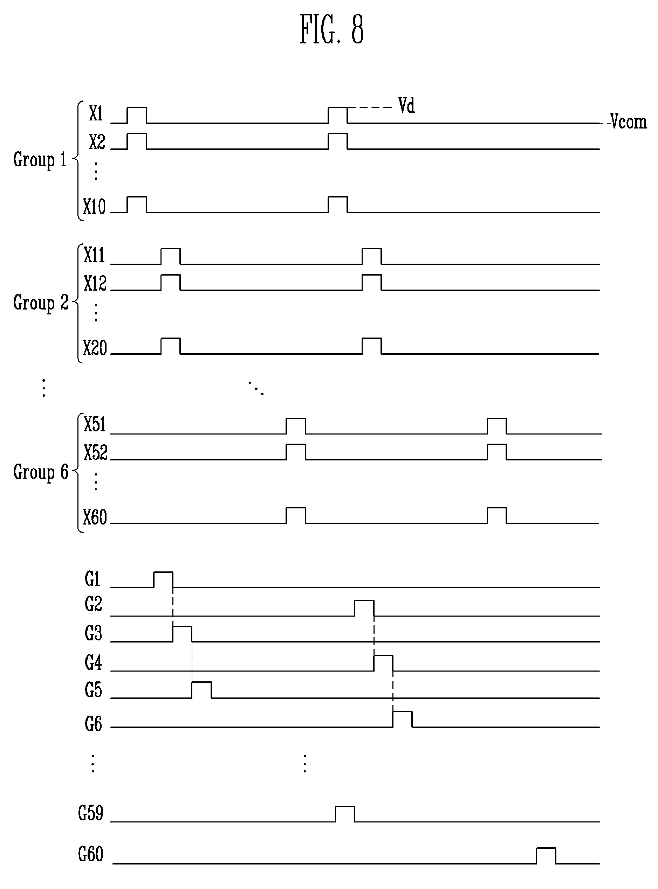

FIG. 7 illustrates a graph of driving an integrated touch screen panel according to another example. FIG. 8 illustrates a waveform diagram of signals provided by the common electrode driver and the gate driver for the purpose of the driving in FIG. 7.

In the example illustrated in FIGS. 7-8, a case where the gate lines G1 to Gn have a sequence difference of two is shown. That is, in a case where the gate lines G1 to G60 have a sequence difference of two, a first group includes the first gate line G1, the third gate line G3, the fifth gate line G4, ..., the 57th gate line G57 and the 59th gate line G59, and a second group includes the second gate line G2, the fourth gate line G4, the sixth gate line G6, ..., the 58th gate line G58 and the 60th gate line G60. Consequently, in a case where the sequence difference is two, the plurality of gate lines are divided into odd-numbered gate lines and even-numbered gate lines.

Thus, the gate driver 3 may sequentially supply a gate signal to the first group configured as the odd-numbered gate lines during a frame period. Then, the gate driver 3 may sequentially supply the gate signal to the second group configured as the even-numbered gate lines during the frame period.

Like the example described with reference to FIGS. 5 and 6, the supply of the driving signal to each of the groups by the common electrode driver 5 may be alternately performed with the supply of the driving signal to each of the group by the gate driver 3.

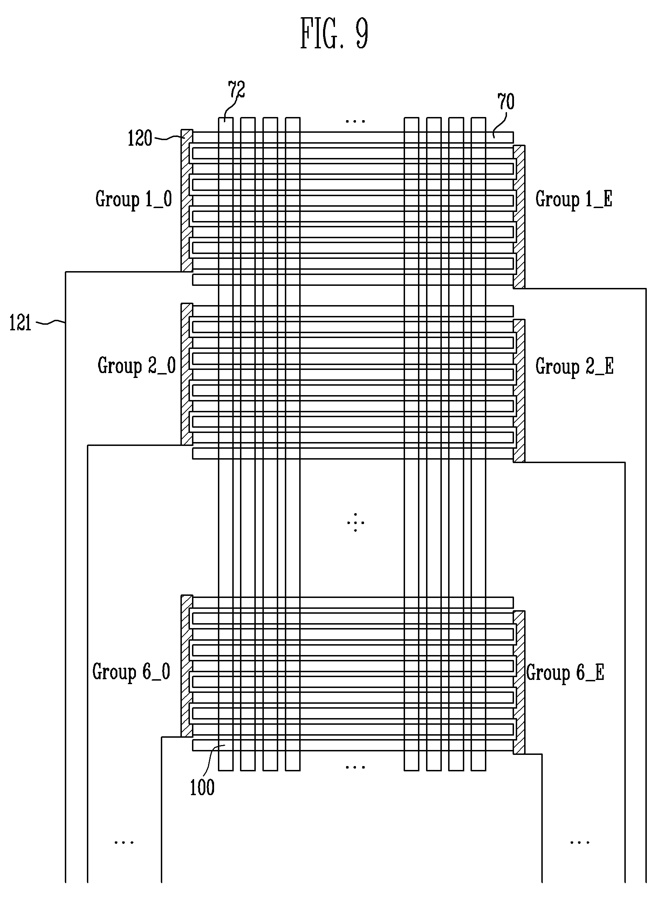

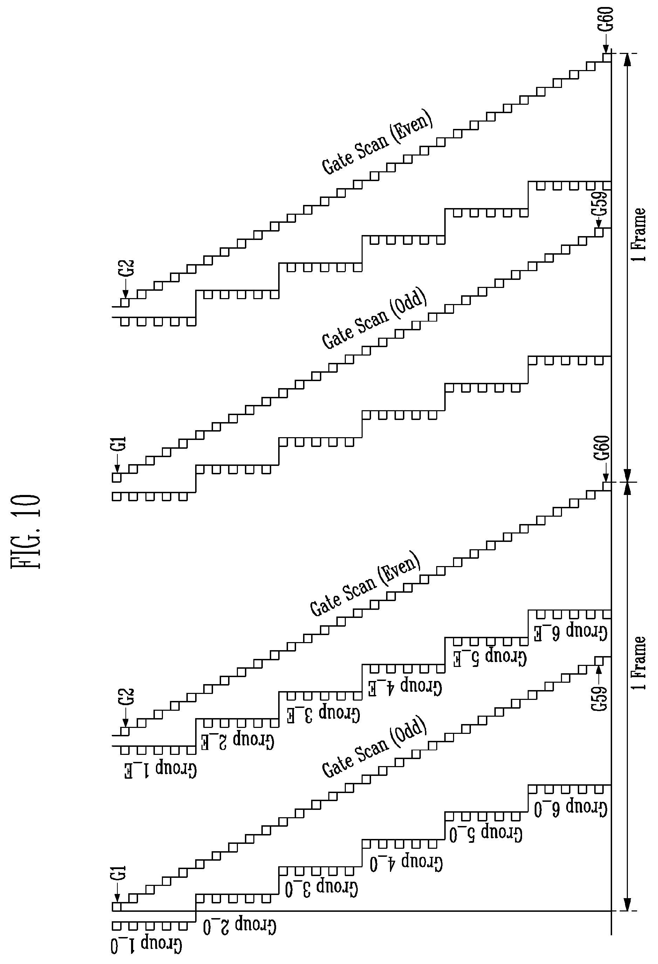

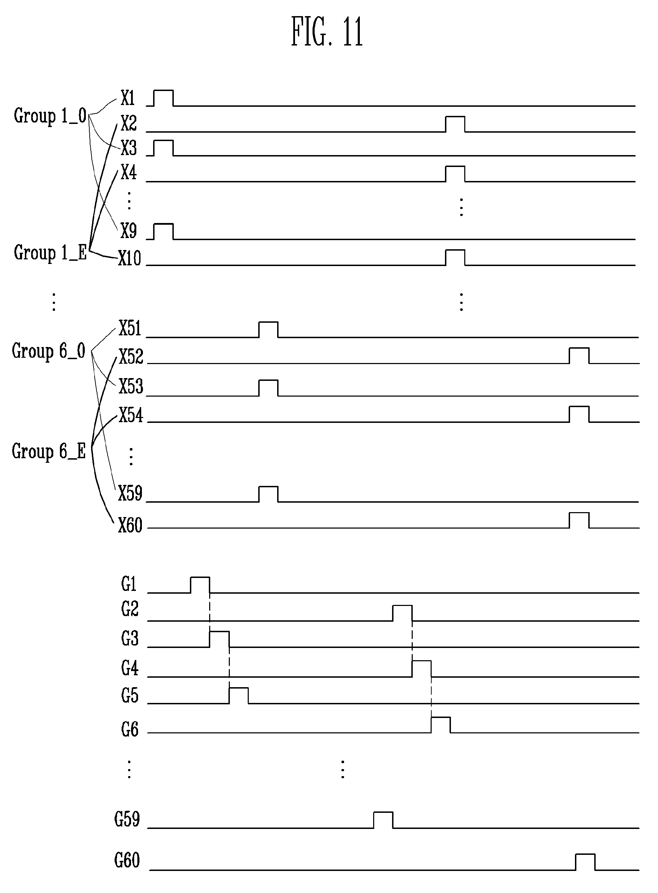

FIG. 9 illustrates a view of common electrode patterns (driving electrodes) and sensing electrodes according to another embodiment. FIG. 10 illustrates a graph of driving an LCD with an integrated touch screen panel according to another embodiment. FIG. 11 illustrates a waveform diagram of signals provided by the common electrode driver and the gate driver in the driving of FIG. 10.

Referring to FIGS. 10 and 11, for a plurality of groups divided into groups obtained by dividing odd-numbered common electrodes based on a sequence difference and groups obtained by dividing even-numbered common electrodes based on a sequence difference, the common electrode driver 5 according to this embodiment simultaneously supplies a driving signal to common electrodes included in each of the groups. The common electrode driver 5 sequentially supplies the driving signal to each of the groups including the odd-numbered common electrodes. The common electrode driver 5 sequentially supplies the driving signal to each of the groups including the even-numbered common electrodes.

The operation of the gate driver 3 that supplies a gate signal to the gate lines G1 to Gn is identical to that in the embodiment described with reference to FIGS. 7 and 8. However, in this embodiment, the common electrodes may be sequentially divided with respect to the odd-numbered and even-numbered common electrodes. In other words, a predetermined number of odd-numbered common electrodes from the first common electrode X1 that is a first common electrode among the odd-numbered common electrodes are included in each of the groups, and a predetermined number of even-numbered common electrodes from the second common electrode X2 that is a first common electrode among the even-numbered common electrodes are included in each of the groups.

For example, as shown in FIG. 10, the odd-numbered common electrodes are divided into a first group Group 1_O including a first common electrode X1, a third common electrode X3, a fifth common electrode X5, a seventh common electrode X7 and a ninth common electrode X9; a second group Group 2_O including an 11th common electrode X11, a 13th common electrode X13, a 15th common electrode X15, a 17th common electrode X17 and a 19th common electrode X19; a third group Group 3_O including a 21st common electrode X21, a 23rd common electrode X23, a 25th common electrode X25, a 27th common electrode X27 and a 29th common electrode X29; a fourth group Group 4_O including a 31st common electrode X31, a 33rd common electrode X33, a 35th common electrode X35, a 37th common electrode X37 and a 39th common electrode X39; a fifth group Group 5_O including a 41st common electrode X41, a 43rd common electrode X43, a 45th common electrode X45, a 47th common electrode X47 and a 49th common electrode X49; and a sixth group Group 6_O including a 51st common electrode X51, a 53rd common electrode X53, a 55th common electrode X55, a 57th common electrode X57 and a 59th common electrode X59.

The even-numbered common electrodes are divided into a first group Group 1_E including a second common electrode X2, a fourth common electrode X4, a sixth common electrode X6, an eighth common electrode X8 and a tenth common electrode X10; a second group Group 2_E include a 12th common electrode X12, a 14th common electrode X14, a 16th common electrode X16, an 18th common electrode 118 and a 20th common electrode X20; a third group Group 3_E including a 22nd common electrode X22, a 24th common electrode X24, a 26th common electrode X26, a 28th common electrode X28 and a 30th common electrode X30; a fourth group Group 4_E including a 32nd common electrode X32, a 34th common electrode X34, a 36th common electrode X36, a 38th common electrode X38 and a 40th common electrode X40; a fifth group Group 5_E including a 42nd common electrode X42, a 44th common electrode X44, a 46th common electrode X46, a 48th common electrode X48 and a 50th common electrode X50; and a sixth group Group 6_E including a 52nd common electrode X52, a 54th common electrode X54, a 56th common electrode X56, a 58th common electrode X58 and a 60th common electrode X60.

In this instance, the common electrode driver 5 may simultaneously supply a driving signal to the common electrodes included in the same group. For example, the common electrode driver 5 may simultaneously supply a driving signal to the common electrodes X1, X3, X5, X7, and X9 in Group 1_O. For the plurality of groups including the odd-numbered common electrodes and the plurality of groups including the even-numbered common electrodes, the common electrode driver 5 may sequentially supply the driving signal to each of the groups.

That is, as shown in FIGS. 10 and 11, the common electrode driver 5 may sequentially supply the driving signal to the first group Group 1_O through the sixth group Group 6_O, i.e., the plurality of groups including the odd-numbered common electrodes.

The common electrode driver 5 may sequentially supply the driving signal to the first group Group 1_E through the sixth group Group 6_E, i.e., the plurality of groups including the even-numbered common electrodes.

To this end, as shown in FIG. 9, a conducting portion 120 may be formed to electrically connect common electrodes at an outside of the common electrodes included in each of the first to sixth groups Group 1_O to Group 6_O configured as the odd-numbered common electrode patterns and the first to sixth groups Group 1_E to Group 6_E configured as the even-numbered electrodes.

In this instance, the supply of the driving signal to the plurality of groups configured as the odd-numbered common electrode patterns may be performed before the supply of the driving signal to the plurality of groups configured as the odd-numbered gate lines. The supply of the driving signal to the plurality of groups configured as the even-numbered common electrode patterns may be performed before the supply of the driving signal to plurality of groups configured as the even-numbered gate lines.

That is, after a driving signal is sequentially supplied to the first to sixth groups Group 1_O to Group 6_O configured as the odd-number common electrodes, a gate signal is sequentially supplied to the odd-numbered gate lines. After the driving signal is sequentially supplied to the first to sixth groups Group 1_E to Group 6_E configured as the even-numbered common electrodes, the gate signal is then sequentially supplied to the even-numbered gate lines.

As described above, according to the embodiments, an LCD with an integrated touch screen panel may include a common electrode that may be used both as an electrode to display an image on the LCD screen and as a driving electrode of a capacitive touch screen panel. Therefore, using the same electrode for different functions may reduce processing time and cost and may decrease the thickness of the LCD. Also, it may be possible to increase touch sensitivity without degradation of image quality.

Exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A liquid crystal display (LCD) with an integrated touch screen panel, comprising:
a plurality of pixels (P), each connected to a thin film transistor, wherein each thin film transistor (Tr) is connected to one of a plurality of data lines (D₁, D₂, D₃, Dm) and one of a plurality of gate lines (G₁, G₂, G₃, Gn), the gate lines being divided into a plurality of groups;
a plurality of sensing electrodes (72);
a plurality of common electrodes (70) extending in a first direction and spaced apart in a second direction, wherein the sensing electrodes and the common electrodes intersect each other, and wherein the plurality of sensing electrodes are configured to detect a change in capacitance between the sensing electrodes and the common electrodes;
a common electrode driver (5) configured to supply a driving signal Vd for detecting a touch position and a common voltage Vcom to the common electrodes, wherein the common electrode driver is configured to supply either a common voltage Vcom or a driving signal Vd to each of the common electrodes, wherein the common voltage Vcom is supplied to each common electrode when the driving signal Vd is not being supplied, and wherein the driving signal Vd has a different voltage to the common voltage Vcom;
**characterised by** the gate lines are divided into two groups by dividing the gate lines into one group with odd-numbered lines and another group with even-numbered gate lines;
a gate driver (3) configured to sequentially supply a gate signal to gate lines within each of the plurality of groups of the gate lines for turning on the thin film transistor,
for a plurality of groups of common electrodes obtained by sequentially dividing the odd-numbered common electrodes into groups and sequentially dividing the even-numbered common electrodes into groups, the common electrode driver is configured to simultaneously supply a driving signal to the common electrodes included in each of the groups, sequentially supply the driving signal to the plurality of groups of common electrodes configured with odd-numbered common electrodes and afterwards sequentially supply the driving signal to the plurality of groups configured with even-numbered common electrodes;
such that the supply of the driving signal to the first group configured with odd-numbered common electrodes is performed before starting the supply of the gate signal to the group configured as the odd-numbered gate lines, and the supply of the driving signal to the first group configured with even-numbered common electrodes is performed before starting the supply of the gate signal to the group configured as the even-numbered gate lines.

2. The LCD as claimed in claim 1, further comprising:
first and second substrates (11, 61) spaced apart from each other; and
a liquid crystal layer (90) between the first and second substrates.

3. The LCD as claimed in claim 2, wherein the sensing electrodes and the common electrodes are positioned in a same layer or in different layers from each other at any one of the substrates.

4. The LCD as claimed in any one of the preceding claims, wherein the supply of the driving signal by the common electrode driver and the supply of the gate signal by the gate driver are alternately performed with respect to each other.

5. The LCD as claimed in any one of the preceding claims, wherein the driving signal has a higher voltage than the common voltage.

6. A method of driving an LCD with an integrated touch screen panel according to any one of the preceding claims, the method **characterised by**:
dividing the gate lines into two groups by dividing the gate lines into one group with odd-numbered gate lines and another group with even-numbered gate lines;
sequentially supplying a gate signal to gate lines within each of the plurality of groups of the gate lines for turning on the thin film transistor;
for a plurality of groups of common electrodes obtained by sequentially dividing the odd-numbered common electrodes into groups and sequentially dividing the even-numbered common electrodes into groups, a driving signal is simultaneously supplied to the common electrodes included in each of the groups, the driving signal is sequentially supplied to the plurality of groups of common electrodes configured with odd-numbered common electrodes and afterwards sequentially supplied to the plurality of groups configured with even-numbered common electrodes; and
such that in the supplying of the driving signal to the first group configured with odd-numbered common electrodes, the supply is performed before starting the supply of the gate signal to the group configured as the odd-numbered gate lines, and the supply of the driving signal to the first group configured with even-numbered common electrodes is performed before starting the supply of the gate signal to the group configured as the even-numbered gate lines.

## Patentansprüche

1. Flüssigkristallanzeige (LCD) mit einer integrierten Berührungsbildschirmtafel, umfassend:
eine Mehrzahl von Pixeln (P), die jeweils an einen Dünnschichttransistor angeschlossen sind, wobei jeder Dünnschichttransistor (Tr) an eine einer Mehrzahl von Datenleitungen (D1, D2, D3, Dm) und eine einer Mehrzahl von Gate-Leitungen (G1, G2, G3, Gn) angeschlossen ist, wobei die Gate-Leitungen in eine Mehrzahl von Gruppen unterteilt sind,
eine Mehrzahl von Messelektroden (72),
eine Mehrzahl von gemeinsamen Elektroden (70), die sich in eine erste Richtung erstrecken und in eine zweite Richtung beabstandet sind, wobei die Messelektroden und die gemeinsamen Elektroden einander schneiden, und wobei die Mehrzahl von Messelektroden so konfiguriert ist, dass sie eine Kapazitätsänderung zwischen den Messelektroden und den gemeinsamen Elektroden detektiert,
einen gemeinsamen Elektrodentreiber (5), der so konfiguriert ist, dass er an die gemeinsamen Elektroden ein Treibsignal Vd zum Detektieren einer Berührungsposition und eine gemeinsame Spannung Vcom liefert,
wobei der gemeinsame Elektrodentreiber so konfiguriert ist, dass er an jede der gemeinsamen Elektroden entweder eine gemeinsame Spannung Vcom oder ein Treibsignal Vd liefert,
wobei an jede gemeinsame Elektrode die gemeinsame Spannung Vcom geliefert wird, wenn das Treibsignal Vd nicht geliefert wird, und wobei die Spannung des Treibsignals Vd von der gemeinsamen Spannung Vcom verschieden ist,
**gekennzeichnet durch** das Unterteilen der Gate-Leitungen in zwei Gruppen, indem die Gate-Leitungen in eine Gruppe mit ungeradzahligen Leitungen und eine andere Gruppe mit geradzahligen Gate-Leitungen unterteilt werden,
einen Gate-Treiber (3), der so konfiguriert ist, dass er an Gate-Leitungen innerhalb jeder der Mehrzahl von Gruppen der Gate-Leitungen ein Gate-Signal zum Einschalten des Dünnschichttransistors sequentiell liefert,
wobei für eine Mehrzahl von Gruppen von gemeinsamen Elektroden, die **durch** sequentielles Unterteilen der ungeradzahligen gemeinsamen Elektroden in Gruppen und sequentielles Unterteilen der geradzahligen gemeinsamen Elektroden in Gruppen erhalten wurde, der gemeinsame Elektrodentreiber so konfiguriert ist, dass er an die in jeder der Gruppen eingeschlossenen gemeinsamen Elektroden ein Treibsignal gleichzeitig liefert, an die Mehrzahl von Gruppen von gemeinsamen Elektroden, die mit ungeradzahligen gemeinsamen Elektroden konfiguriert ist, das Treibsignal sequentiell liefert und danach an die Mehrzahl von Gruppen, die mit geradzahligen gemeinsamen Elektroden konfiguriert ist, das Treibsignal sequentiell liefert,
derart, dass die Lieferung des Treibsignals an die erste Gruppe, die mit ungeradzahligen gemeinsamen Elektroden konfiguriert ist, durchgeführt wird, bevor mit der Lieferung des Gate-Signals an die Gruppe, die als die ungeradzahligen Gate-Leitungen konfiguriert ist, begonnen wird, und die Lieferung des Treibsignals an die erste Gruppe, die mit geradzahligen gemeinsamen Elektroden konfiguriert ist, durchgeführt wird, bevor mit der Lieferung des Gate-Signals an die Gruppe, die als die geradzahligen Gate-Leitungen konfiguriert ist, begonnen wird.

2. LCD nach Anspruch 1, ferner umfassend:
ein erstes und ein zweites Substrat (11, 61), die zueinander beabstandet sind, und
eine Flüssigkristallschicht (90) zwischen dem ersten und dem zweiten Substrat.

3. LCD nach Anspruch 2, wobei die Messelektroden und die gemeinsamen Elektroden in einer selben Schicht oder in voneinander verschiedenen Schichten auf irgendeinem der Substrate positioniert sind.

4. LCD nach einem der vorangehenden Ansprüche, wobei die Lieferung des Treibsignals durch den gemeinsamen Elektrodentreiber und die Lieferung des Gate-Signals durch den Gate-Treiber einander abwechselnd durchgeführt werden.

5. LCD nach einem der vorangehenden Ansprüche, wobei die Spannung des Treibsignals höher als die gemeinsame Spannung ist.

6. Verfahren zum Ansteuern einer LCD mit einer integrierten Berührungsbildschirmtafel nach einem der vorangehenden Ansprüche, wobei das Verfahren **gekennzeichnet ist durch**:
Unterteilen der Gate-Leitungen in zwei Gruppen **durch** Unterteilen der Gate-Leitungen in eine Gruppe mit ungeradzahligen Gate-Leitungen und eine andere Gruppe mit geradzahligen Gate-Leitungen,
sequentielles Liefern eines Gate-Signals an Gate-Leitungen innerhalb jeder der Mehrzahl von Gruppen der Gate-Leitungen zum Einschalten des Dünnschichttransistors,
für eine Mehrzahl von Gruppen von gemeinsamen Elektroden, die **durch** sequentielles Unterteilen der ungeradzahligen gemeinsamen Elektroden in Gruppen und sequentielles Unterteilen der geradzahligen gemeinsamen Elektroden in Gruppen erhalten wurde, gleichzeitiges Liefern eines Treibsignals an die in jeder der Gruppen eingeschlossenen gemeinsamen Elektroden, sequentielles Liefern des Treibsignals an die Mehrzahl von Gruppen von gemeinsamen Elektroden, die mit ungeradzahligen gemeinsamen Elektroden konfiguriert ist, und anschließendes sequentielles Liefern des Treibsignals an die Mehrzahl von Gruppen, die mit geradzahligen gemeinsamen Elektroden konfiguriert ist, und
derart, dass bei der Lieferung des Treibsignals an die erste Gruppe, die mit ungeradzahligen gemeinsamen Elektroden konfiguriert ist, die Lieferung durchgeführt wird, bevor mit der Lieferung des Gate-Signals an die Gruppe, die als die ungeradzahligen Gate-Leitungen konfiguriert ist, begonnen wird, und die Lieferung des Treibsignals an die erste Gruppe, die mit geradzahligen gemeinsamen Elektroden konfiguriert ist, durchgeführt wird, bevor mit der Lieferung des Gate-Signals an die Gruppe, die als die geradzahligen Gate-Leitungen konfiguriert ist, begonnen wird.

## Revendications

1. Dispositif d'affichage à cristaux liquides (LCD) avec un panneau à écran tactile intégré, comprenant :
une pluralité de pixels (P), chacun étant connecté à un transistor à couches minces, où chaque transistor à couches minces (Tr) est connecté à l'une d'une pluralité de lignes de données (D1, D2, D3, Dm) et l'une d'une pluralité de lignes de grille (G1, G2, G3, Gn), les lignes de grille étant divisées en une pluralité de groupes ;
une pluralité d'électrodes de détection (72) ;
une pluralité d'électrodes communes (70) s'étendant dans une première direction et espacées dans une deuxième direction, où les électrodes de détection et les électrodes communes se croisent, et où la pluralité d'électrodes de détection sont configurées pour détecter un changement de capacité entre les électrodes de détection et les électrodes communes ;
un dispositif d'attaque d'électrodes communes (5) configuré pour alimenter, en un signal d'attaque Vd pour détecter une position de contact et en une tension commune Vcom, les électrodes communes,
dans lequel le dispositif d'attaque d'électrodes communes est configuré pour alimenter soit en une tension commune Vcom ou en un signal d'attaque Vd chacune des électrodes communes,
dans lequel la tension commune Vcom alimente chaque électrode commune lorsque l'alimentation en signal d'attaque Vd n'est pas effectuée, et où le signal d'attaque Vd a une tension différente de la tension commune Vcom ;
**caractérisé en ce que** les lignes de grille sont divisées en deux groupes en divisant les lignes de grille en un groupe avec des lignes à numéro impair et un autre groupe avec des lignes de grille à numéro pair ;
un dispositif d'attaque de grille (3) configuré pour alimenter séquentiellement, en un signal de grille, des lignes de grille dans chacun de la pluralité de groupes des lignes de grille pour mettre sous tension le transistor à couches minces,
pour une pluralité de groupes d'électrodes communes obtenus en divisant séquentiellement les électrodes communes à numéro impair en groupes et en divisant séquentiellement les électrodes communes à numéro pair en groupes, le dispositif d'attaque d'électrodes communes est configuré pour alimenter simultanément, en un signal d'attaque, les électrodes communes incluses dans chacun des groupes, pour alimenter séquentiellement, en signal d'attaque, la pluralité de groupes d'électrodes communes configurés avec des électrodes communes à numéro impair et ensuite pour alimenter séquentiellement, en signal d'attaque, la pluralité de groupes configurés avec des électrodes communes à numéro pair ;
de sorte que l'alimentation en signal d'attaque du premier groupe configuré avec des électrodes communes à numéro impair soit effectuée avant de commencer l'alimentation en signal de grille du groupe configuré comme étant les lignes de grille à numéro impair, et l'alimentation en signal d'attaque du premier groupe configuré avec des électrodes communes à numéro pair soit effectuée avant de commencer l'alimentation en signal de grille du groupe configuré comme étant les lignes de grille à numéro pair.

2. LCD tel que revendiqué dans la revendication 1, comprenant en outre :
des premier et deuxième substrats (11, 61) espacés l'un de l'autre ; et
une couche de cristaux liquides (90) entre les premier et deuxième substrats.

3. LCD tel que revendiqué dans la revendication 2, dans lequel les électrodes de détection et les électrodes communes sont positionnées dans une même couche ou dans des couches différentes l'une de l'autre au niveau de l'un quelconque des substrats.

4. LCD tel que revendiqué dans l'une quelconque des revendications précédentes, dans lequel l'alimentation en signal d'attaque par le dispositif d'attaque d'électrodes communes et l'alimentation en signal de grille par le dispositif d'attaque de grille sont effectuées en alternance l'une par rapport à l'autre.

5. LCD tel que revendiqué dans l'une quelconque des revendications précédentes, dans lequel le signal d'attaque a une tension supérieure à la tension commune.

6. Procédé d'attaque de LCD avec un panneau à écran tactile intégré selon l'une quelconque des revendications précédentes, le procédé étant **caractérisé par** le fait :
de diviser les lignes de grille en deux groupes en divisant les lignes de grille en un groupe avec des lignes de grille à numéro impair et un autre groupe avec des lignes de grille à numéro pair ;
d'alimenter séquentiellement, en un signal de grille, des lignes de grille dans chacun de la pluralité de groupes des lignes de grille pour mettre sous tension le transistor à couches minces ;
pour une pluralité de groupes d'électrodes communes obtenus en divisant séquentiellement les électrodes communes à numéro impair en groupes et en divisant séquentiellement les électrodes communes à numéro pair en groupes, un signal d'attaque alimente simultanément les électrodes communes incluses dans chacun des groupes, le signal d'attaque alimente séquentiellement la pluralité de groupes d'électrodes communes configurés avec des électrodes communes à numéro impair et ensuite alimente séquentiellement la pluralité de groupes configurés avec des électrodes communes à numéro pair ; et
de sorte que dans l'alimentation en signal d'attaque du premier groupe configuré avec des électrodes communes à numéro impair, l'alimentation soit effectuée avant de commencer l'alimentation en signal de grille du groupe configuré comme étant les lignes de grille à numéro impair, et l'alimentation en signal d'attaque du premier groupe configuré avec des électrodes communes à numéro pair soit effectuée avant de commencer l'alimentation en signal de grille du groupe configuré comme étant les lignes de grille à numéro pair.
